Europäisches Patentamt

**European Patent Office**

**Office européen des brevets**

(11) Numéro de publication: **0 483 601 B1**

(12) **FASCICULE DE BREVET EUROPEEN**

(45) Date de publication du fascicule du brevet: **23.08.95**  (51) Int. Cl.⁶: **D02H 3/00**, D01H 7/90

(21) Numéro de dépôt: **91117636.0**

(22) Date de dépôt: **15.10.91**

(54) **Procédé et installation permettant d'obtenir en ligne la réalisation d'une nappe d'assemblages et son enroulage sur une ensouple.**

(30) Priorité: **29.10.90 FR 9013503**

(43) Date de publication de la demande:
**06.05.92 Bulletin 92/19**

(45) Mention de la délivrance du brevet:
**23.08.95 Bulletin 95/34**

(84) Etats contractants désignés:
**AT BE CH DE DK ES FR GB GR IT LI LU NL SE**

(56) Documents cités:
**EP-A- 0 152 919**
**EP-A- 0 211 387**
**EP-A- 0 333 885**
**DE-A- 3 411 927**
**US-A- 4 789 008**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **Château, Fernand**
**88, avenue de Riom**
**F-63430 Pont-du-Château (FR)**

(74) Mandataire: **Doussaint, Jean-Marie et al**
**MICHELIN & CIE**
**Service K. Brevets**
**23, Place des Carmes**
**F-63040 Clermont-Ferrand Cedex (FR)**

## Description

L'invention concerne les procédés et les installations permettant de réaliser des assemblages de fils textiles.

Le terme "fil" doit être pris dans un sens très général. Un fil peut être un "fil simple" constitué par un ou plusieurs filaments. Lorsque le fil simple est constitué par un seul filament, il est appelé "monofilament" et lorsque le fil simple est constitué par plusieurs filaments, il est appelé "multifilament". Un fil peut être d'autre part lui-même un ensemble de fils simples.

Un assemblage de fils est appelé "retors" lorsqu'il est constitué par plusieurs fils simples réunis par une seule opération de torsion, et un assemblage de fils est appelé "câblé" lorsqu'il est constitué par plusieurs fils, dont au moins un est un retors, réunis par une ou plusieurs opérations de torsion.

De tels assemblages sont utilisés par exemple pour renforcer des articles en matières plastiques et/ou en caoutchouc, de tels articles étant par exemple des courroies, des tuyaux, des enveloppes de pneumatiques.

Une méthode connue pour fabriquer des assemblages textiles comporte plusieurs opération successives que l'on peut diviser en deux familles principales :

- les opérations d'assemblage de fils textiles ; ces opérations peuvent être réalisées en une étape, avec, par exemple un procédé de câblage direct, ou en plusieurs étapes, par exemple en préparant tout d'abord des multifilaments tordus que l'on assemble ensuite pour obtenir des retors ; les assemblages sont ainsi obtenus sous forme de bobines ;
- une opération d'ourdissage, en déroulant un certain nombre de bobines d'assemblages pour les enrouler sur une ensouple.

Cette méthode conduit aux inconvénients suivants :

- les opérations sont complexes, coûteuses, et manquent de souplesse ;
- il est pratiquement impossible d'avoir un grand nombre de bobines ayant la même longueur ; il est donc nécessaire de réaliser des aboutages, lors de l'enroulage sur l'ensouple, ce qui prend du temps et provoque la formation de défauts, ou on n'effectue pas d'aboutage, mais il y a alors une quantité importante de déchets ;
- la longueur des assemblages varie sur une même ensouple, car il est pratiquement impossible de délivrer la même longueur d'assemblage à partir de chaque bobine.

On a essayé de réaliser en ligne une nappe d'assemblage de fils et l'enroulage de cette nappe sur une ensouple, mais cette réalisation était jusqu'ici très difficile à mettre en oeuvre dans la pratique car les défauts provenant des fils ou des assemblages conduisent à des arrêts fréquents des intallations, et la réparation de ces défauts ainsi que l'arrêt et le redémarrage des installations conduisent à des déchets importants, à une diminution de la qualité des assemblages, ainsi qu'à des coûts élevés et à des temps d'arrêt longs. Une telle technique est décrite par exemple dans EP-A-0 333 885 qui divulgue l'emploi de plusieurs dispositifs rotatifs avant une ensouple.

Le but de l'invention est de remédier à ces inconvénients.

En conséquence, la présente invention concerne un procédé permettant d'obtenir en ligne la réalisation d'une nappe d'assemblages de fils et l'enroulage de cette nappe sur une ensouple en utilisant plusieurs dispositifs rotatifs permettant chacun la réalisation d'un assemblage à partir de plusieurs fils de façon à obtenir une nappe d'assemblages, le procédé étant caractérisé par les points suivants :

a) on effectue la réalisation des assemblages de telle sorte qu'en régime transitoire, c'est-à-dire lorsque la vitesse de rotation de chaque dispositif varie dans le temps entre une valeur nulle et une valeur arbitraire, correspondant au fonctionnement en continu, on ait la relation

$$\frac{L1 - L2}{L} \le \varepsilon,$$

L1 étant la longueur du fil le plus long de l'assemblage, L2 étant la longueur du fil le plus court de l'assemblage, L1 et L2 étant déterminées pour la longueur L arbitraire de l'assemblage produit par ce dispositif, et $\epsilon$ étant une valeur arbitraire ;

b) on entraîne la nappe d,assemblages par des moyens de tirage communs à tous les assemblages ;

c) on utilise des moyens permettant d'une part de synchroniser entre elles les vitesses de rotation des dispositifs, de façon à avoir une vitesse commune pour ces dispositifs et d'autre part de synchroniser la vitesse des dispositifs et la vitesse des moyens de tirage ;

d) on enroule la nappe d'assemblages sur l'ensouple ;

e) on utilise des moyens permettant de détecter un défaut éventuel sur au moins un fil quelconque, ou au moins un assemblage quelconque ;

f) on arrête la production de la nappe et l'enroulement de la nappe sur l'ensouple lorsqu'un tel défaut est détecté, cet arrêt étant réalisé de telle sorte que le défaut soit disposé à l'arrêt dans la nappe, avant l'ensouple, dans le sens de progression de la nappe.

L'invention concerne également une installation permettant d'obtenir en ligne la réalisation d'une nappe d'assemblages de fils et l'enroulage de cette nappe sur une ensouple, l'installation comportant plusieurs dispositifs rotatifs permettant chacun la réalisation d'un assemblage à partir de plusieurs fils, de façon à obtenir une nappe d'assemblages, l'installation étant caractérisée par les points suivants :

a) chaque dispositif est tel qu'en régime transitoire, c'est-à-dire lorsque la vitesse de rotation de ce dispositif varie dans le temps entre une valeur nulle et une valeur arbitraire, correspondant au fonctionnement en continu de l'installation, on ait la relation :

$$\frac{L1 - L2}{L} \leq \varepsilon,$$

L1 étant la longueur du fil le plus long de l'assemblage, L2 étant la longueur du fil le plus court de l'assemblage, L1 et L2 étant déterminées pour la longueur L arbitraire de l'assemblage produit par ce dispositif, et $\varepsilon$ étant une valeur arbitraire ;

b) elle comporte des moyens de tirage communs à tous les assemblages permettant l'entraînement de la nappe d'assemblages ;

c) elle comporte des moyens permettant d'une part de synchroniser entre elles les vitesses de rotation des dispositifs, de façon à avoir une vitesse commune pour ces dispositifs, et d'autre part de synchroniser la vitesse des dispositifs et la vitesse des moyens de tirage ;

d) elle comporte une ensouple et des moyens permettant d'enrouler la nappe d'assemblages sur l'ensouple ;

e) elle comporte des moyens permettant de détecter un défaut éventuel sur au moins un fil quelconque ou au moins un assemblage quelconque ;

f) elle comporte des moyens permettant d'arrêter l'installation lorsqu'un tel défaut est détecté, l'installation étant agencée de telle sorte que, lorsque l'installation est ainsi arrêtée, le défaut soit disposé dans la nappe, avant l'ensouple, dans le sens de progression de la nappe.

Les exemples de réalisation qui suivent, ainsi que les figures toutes schématiques du dessin correspondant à ces exemples, sont destinés à illustrer l'invention et à en faciliter la compréhension sans toutefois en limiter la portée.

Sur le dessin :

- la figure 1 représente, en coupe longitudinale, une installation conforme à l'invention ;

- la figure 2 représente, vue de dessus, l'installation représentée à la figure 1 ;

- la figure 3 représente un dispositif rotatif utilisé dans l'installation représentée aux figures 1 et 2, la figure 3 étant une coupe selon l'axe de rotation de ce dispositif.

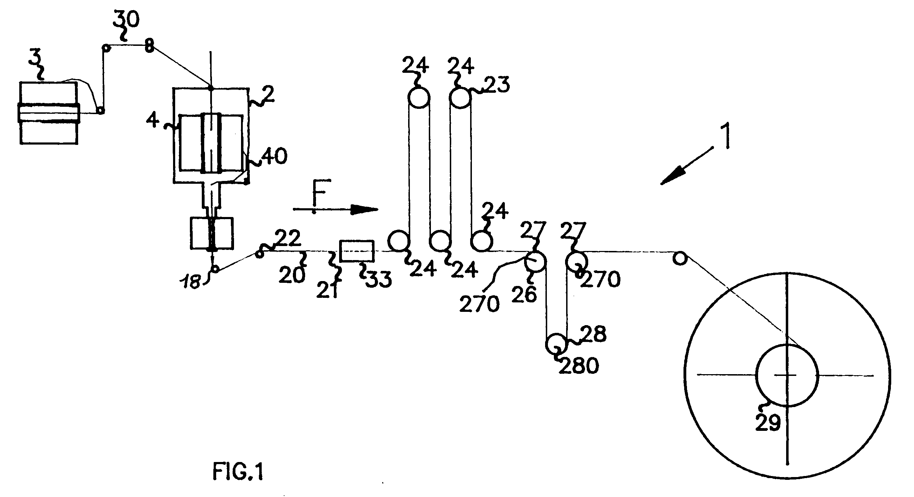

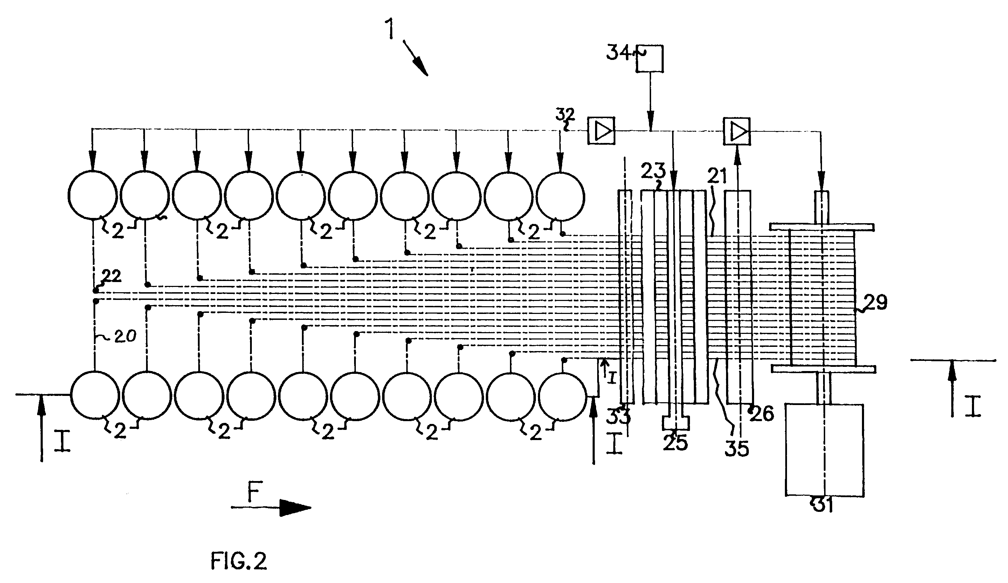

Les figures 1 et 2 représentent une installation 1 conforme à l'invention, la figure 1 étant une coupe longitudinale et la figure 2 étant une vue de dessus, la coupe de la figure 1 étant schématisée par les segments de lignes droites I-I à la figure 2. L'installation 1 comporte des dispositifs 2 rotatifs permettant chacun la réalisation d'un assemblage à partir de plusieurs fils.

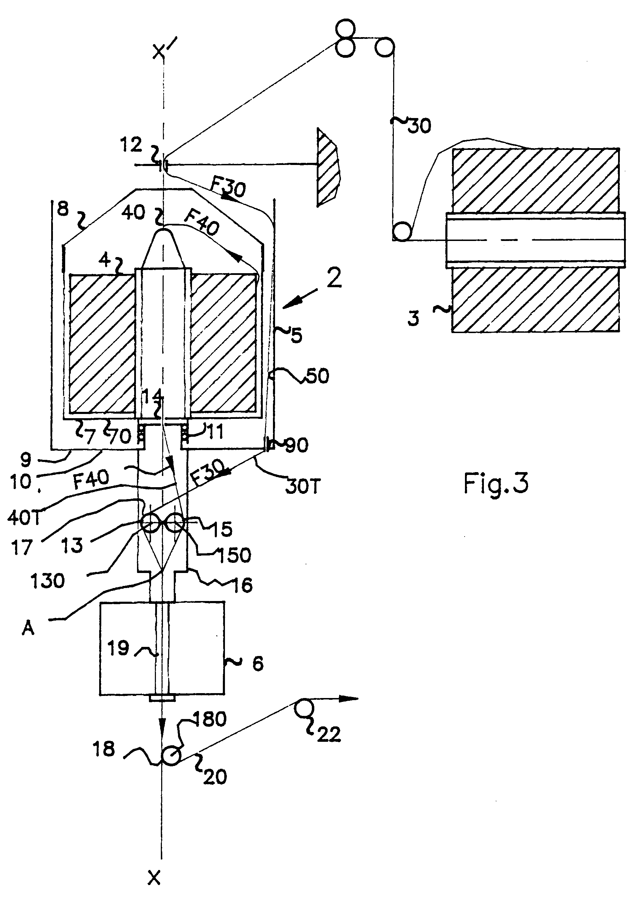

A titre d'exemple, chacun de ces dispositifs 2 est conforme au brevet français publié sous le N° 2 586 038. La figure 3 représente un de ces dispositifs 2. Ce dispositif 2 permet par exemple de réaliser un retors à partir de deux fils qui sont des multifilaments non tordus. Le dispositif 2 comporte deux bobines 3 et 4 sur chacune desquelles est enroulé un fil, qui est un multifilament non tordu, le fil 30 étant enroulé sur la bobine 3 et le fil 40 étant enroulé sur la bobine 4. Le dispositif 2 comporte un tambour 5 et un moteur 6 susceptible d'entraîner en rotation le tambour 5 autour de l'axe xx' qui est par exemple vertical, la figure 3 étant une coupe effectuée le long de cet axe.

La bobine 3 est disposée à l'extérieur du tambour 5 et la bobine 4 est disposée à l'intérieur du tambour 5, cette bobine 4 étant disposée à l'intérieur d'un pot 7 muni d'un couvercle 8, ce pot 7 étant lui-même disposé à l'intérieur du tambour 5. Le tambour 5 est relié à son extrémité inférieure à une plaque 9, de façon à former une enceinte 10 en forme de cloche qui tourne autour de l'axe xx'.

La bobine 4 est immobile pendant la rotation du tambour 5, grâce à un palier 11 qui permet la rotation de la cloche 10 sans qu'il y ait rotation du pot 7 et donc de la bobine 4.

Le fil 30 passe dans un guide amont 12, constitué par un oeillet circulaire, et il pénètre dans l'extrémité supérieure du tambour 5. Le fil 30 traverse le tambour de haut en bas, il sort du tambour 5 par l'oeillet 90 disposé dans la plaque 9, et il passe ensuite sur un guide aval 13 mobile disposé hors de la cloche 10 et sous cette cloche. Lors de la rotation du tambour 5, le fil 30 entraîné par la force centrifuge se plaque contre la face interne 50 du tambour 5 en tournant solidairement avec le tambour 5 autour du pot 7 et de la bobine 4, sans qu'il y ait de contact entre le fil 30 d'une part et le pot 7 et la bobine 4 d'autre part. Le fil 30 subit ainsi une torsion dans le même sens que la rotation du tambour 5, entre les guides 12 et 13, le fil 30 devenant ainsi un multifilament tordu 30 T.

Le fil 40 délivré par la bobine 4 passe dans un guide 14 amont, constitué par un oeillet disposé dans le fond 70 du pot 7, il sort ensuite du tambour 5 et passe sur un guide aval 15 mobile disposé sous la cloche 10. Entre les guides 14 et 15 le fil 40 subit une torsion dans le sens de rotation du tambour 5 pour donner le multifilament tordu 40 T. Les déplacements des fils 30, 40 sont schématisés par les flèches $F_{30}$, $F_{40}$ à la figure 3.

Les guides aval 13 et 15 sont constitués par des galets dont les axes de rotation 130, 150 sont solidaires d'une broche 16, elle-même solidaire de la cloche 10 et entraînée en rotation par le moteur 6 en même temps que cette cloche à la même vitesse angulaire que le tambour 5. Les guides aval 13, 15 sont interconnectés par les fils 30, 40 et forment un système régulateur 17 entraîné en rotation par le moteur 6 autour de l'axe xx'.

Les multifilaments tordus 30T, 40T sortant du système 17 sont ensuite réunis au point A libre, sur l'axe xx', et on les fait passer sur le galet 18 dont l'axe 180 est fixe. Les deux fils 30T, 40T sont donc tordus entre le point A et le galet 18, étant donné la rotation solidaire des galets 13, 15 autour de l'axe xx', cette torsion, appelée "torsion de retors" ayant un sens opposé à la rotation du tambour 5 et une vitesse angulaire de rotation identique à celle du tambour 5. Le passage des multifilaments tordus 30T, 40T entre le point A et le galet 18, pendant leur assemblage, s'effectue le long de l'axe xx', à l'intérieur du cylindre d'entraînement 19 qui est creux. L'assemblage 20 ainsi obtenu est un retors. Les autres éléments du dispositif 2, par exemple les systèmes régulateurs pour les fils 30, 40, ne sont pas décrits ici dans un but de simplification.

A titre d'exemple vingt dispositifs 2 sont utilisés dans l'installation 1, les vingt assemblages 20 provenant de ces dispositifs 2 formant une nappe 21. Dans un but de simplification un seul dispositif 2 est représenté sur la figure 1, et les dispositifs 2 ont été schématisés par des cercles sur la figure 2. Pour chaque dispositif 2, un galet 22 disposé en aval du galet 18, permet d'orienter le retors 20 en direction de la nappe 21 (figures 2, 3). Pour la simplicité du dessin, un seul de ces galets 22 et un seul assemblage 20 sont référencés à la figure 2.

Chaque dispositif 2 permet d'avoir une tension relativement faible pour les fils 30, 40 au démarrage ou lors de l'arrêt de ce dispositif, par suite du placage du fil 30 contre la paroi interne 50 du tambour 5, et par suite de l'entraînement du système régulateur 17 au moyen du moteur 6, et non par les fils 30, 40. Il s'en suit que l'inertie des systèmes régulateurs 17 et des dispositifs 2 dans leur ensemble est faible, et les dispositifs 2 permettent des accélérations et des décélérations rapides. Dans ces conditions, en régime tansitoire, c'est-à-dire lorsque la vitesse de rotation de chaque dispositif 2 varie dans le temps, lors des arrêts ou des remises en route de ce dispositif, entre une vitesse nulle correspondant à l'arrêt, et une valeur arbitraire, correspondant au fonctionnement en continu, on a la relation suivante, pour chaque dispositif 2 :

$$\frac{L1 - L2}{L} \leq \varepsilon,$$

L1 étant la longueur du fil le plus long de l'assemblage 20, L2 étant la longueur du fil le plus court de l'assemblage 20, L1 et L2 étant déterminées pour la longueur L arbitaire (par exemple 50cm) d'assemblage 20 produit par ce dispositif 2, $\epsilon$ (taux d'assemblage) ayant une valeur arbitaire. La mesure de L, L1 et L2 est effectuée de la façon suivante : on sépare les fils de l'assemblage 20, qui a la longueur L, on détord chacun de ces fils et on mesure L1 et L2 sur ces fils détordus, les mesures de L, L1 et L2 étant effectuées sous une tension standard, qui correspond au poids de 500 m de l'assemblage (dans le cas de L) et de 500 m du fil (dans le cas de L1 et L2).

La qualité de l'assemblage 20 sera d'autant meilleure que $\epsilon$ est plus petit, $\epsilon$ étant de préférence au plus égal à 5 % et avantageusement au plus égal à 2 %.

L'installation 1 est dépourvue de bobinoir et de cabestan de tirage individuels pour chaque dispositif 2. Au contraire, l'ensemble des assemblages 20, c'est-à-dire la nappe 21, provenant des dispositifs 2, après passage sur les galets 22, est mis en mouvement en bloc par un dispositif de tirage 23 constitué par plusieurs cylindres 24 par exemple cinq dont la rotation est obtenue par le moteur 25 de façon à entraîner la nappe 21.

Le sens de progression de la nappe 21 dans la direction longitudinale est représenté par la flèche F. La nappe 21 passe ensuite sur un compensateur 26 qui est constitué de deux rouleaux 27 d'axes 270 fixes et d'un rouleau 28 dont l'axe 280 peut se déplacer verticalement (figure 1). La position du rouleau 28 permet de régler la vitesse de l'ensouple 29 disposée en aval du compensateur 26.

Dans un but de simplification, les dispositifs 23 et 26 ont été schématisés par des rectangles à la figure 2.

La nappe 21 est ensuite enroulée sur l'ensouple 29 dont la rotation est réalisée avec le moteur 31, cette opération correspondant à un ourdissage.

Les moyens 32 de synchronisation permettent d'une part de synchroniser entre elles les vitesses de rotation des dispositifs 2, de façon à avoir une vitesse de rotation commune pour ces dispositifs, et d'autre part de synchroniser cette vitesse commune des dispositifs 2 avec la vitesse linéaire de défilement de la nappe 21, c'est-à-dire la vitesse du dispositif de tirage 23.

Ces moyens 32 sont connus en soi et peuvent être notamment mécaniques, par exemple des dispositifs faisant appel à des courroies ou des arbres de transmission, ou électriques.

L'installation 1 comporte en outre des moyens 33, permettant de détecter un défaut éventuel, par exemple une cassure, pour n'importe lequel des assemblages 20 ou des fils constituant ces assemblages, et un dispositif 34 connu, par exemple une commande électrique, permettant d'arrêter les dispositifs 2, 23, ainsi que le moteur 31 lorsqu'un tel défaut est détecté. Ces moyens 33, connus en soi, peuvent être constitués par exemple par des détecteurs électriques. Cet arrêt est réalisé de telle sorte que le défaut 35 soit disposé dans la nappe 21, avant enroulement sur l'ensouple 29, lorsque l'installation 1 est arrêtée (figure 2). Après arrêt de l'installation, on répare le défaut 35, par exemple en amenant un dispositif connu de réparation, notamment un dispositif permettant de rattacher des fils, au contact de l'assemblage 20 où se trouve le défaut 35. Lorsque le défaut 35 est réparé, on remet l'installation en marche par le dispositif 34.

Il est possible d'arrêter et de remettre en route l'installation 1 rapidement, sans baisse de qualité des assemblages 20, lors de cette période transitoire d'arrêt et de redémarrage, car tous les dispositifs 2 donnent des assemblages 20 qui vérifient la relation précédemment indiquée

$$\frac{L1 - L2}{L} \leq \varepsilon.$$

On évite ou on élimine donc dans une large mesure les déchets lors de ces arrêts et de ces redémarrages.

L'installation 1 conforme à l'invention présente les avantages suivants :

. on réalise en ligne de façon continue à la fois la production des assemblages 20 et l'enroulage d'un grand nombre de ces assemblages sur l'ensouple 29, sans passer par un stade intermédiaire de bobinage, ce qui réduit notablement les coûts et les temps de production ;

. le dispositif 23 de tirage entraîne en bloc toute la nappe 21, de telle sorte que tous les assemblages 20 ont la même vitesse linéaire, ce qui garantit une grande homogénéité dans les caractéristiques de ces assemblages, cela d'autant plus que le dispositif 32 de synchronisation permet de garantir que tous les assemblages 20 sont uniformément réalisés avec la même torsion ;

. le dispositif 23 de tirage permet de découpler les tensions nécessaires au retordage et les tensions nécessaires à l'enroulage sur ensouple, ce qui permet un réglage plus fin de ces tensions et donc ce qui favorise encore l'homogénéité des caractéristiques des assemblages ;

. en jouant sur la synchronisation entre la vitesse de rotation des dispositifs 2 et la vitesse linéaire due au dispositif 23 de tirage, on peut réaliser facilement des assemblages 20 dont la torsion est choisie à la demande ;

. on peut faire varier facilement le nombre d'assemblages 20 sur l'ensouple 29 en arrêtant un certain nombre de dispositifs 2 pour avoir le nombre désiré de ces dispositifs ;

. pour une opération donnée, l'ensouple 29 a la même longueur pour tous les assemblages 20 qui s'y trouvent, cette longueur pouvant être choisie à la demande ; on évite donc les noeuds d'aboutage sur les assemblages et les défauts dus à ces aboutages.

L'installation 1 est donc simple, souple, et économique, cela d'autant plus qu'on limite considérablement les déchets, par rapport aux installations connues.

On peut d'autre part intercaler, dans la ligne de cette installation, des dispositifs connus permettant de traiter les assemblages 20, par exemple pour les imprégner avec des résines, ce qui augmente encore la flexibilité de cette installation.

On peut utiliser dans l'installation 1 d'autres types de dispositifs 2 que celui décrit, à condition que la relation

$$\frac{L1 - L2}{L} \leq \varepsilon,$$

soit vérifiée.

A titre d'exemple, l'installation 1 est utilisée pour obtenir une ensouple dont les caractéristiques sont les suivantes :

. Nombre d'assemblages 20 sur l'ensouple 29 : 100 ;

. Poids de tous ces assemblages 20 sur l'ensouple 29 : 1 t ;

. Caractéristiques de chaque assemblage 20 :

   . fils en aramide ;

   . retors de deux fils, chaque fil ayant un titre de 167 dTex ;

   . torsion de l'assemblage : 300 à 400 tours par mètre en S ;

   . allongement de l'assemblage à la rupture : 3,1 %

   . force de rupture de l'assemblage : 647 N ;

   . valeur de $\varepsilon$ inférieure à 1 %.

Cette ensouple est obtenue pratiquement sans déchet, et sans aboutage et d'autre part tous ces assemblages 20 ont la même longueur sur l'ensouple, car l'installation 1 garantit une tension et une longueur des assemblages uniformes.

A titre de comparaison, une telle ensouple de 100 assemblages identiques aux précédents réalisée de façon connue à partir de bobines de 3 kg nécessite plus de 300 aboutages, ce qui prend du temps et provoque la formation de beaucoup de défauts. Si cette ensouple est réalisée avec des bobines de 10 kg, on évite des aboutages si on arrête l'ourdissage à la fin de la bobine la plus courte, mais on a des déchets importants, en fin d'ourdissage, par suite des différences inévitables de longueurs des bobines car il reste du fil sur les autres bobines.

D'autre part, dans tous les cas, les assemblages 20 ont des longueurs variables sur l'ensouple, car ces longueurs dépendent de la géométrie de l'ensouple et des tension à la sortie de chaque bobine qu'il est pratiquement impossible de maîtriser.

## Revendications

1. Procédé permettant d'obtenir en ligne la réalisation d'une nappe (21) d'assemblages (20) de fils (30, 40) et l'enroulage de cette nappe sur une ensouple (29) en utilisant plusieurs dispositifs rotatifs (2) permettant chacun la réalisation d'un assemblage (20) à partir de plusieurs fils (30, 40) de façon à obtenir une nappe (21) d'assemblages (20), le procédé étant caractérisé par les points suivants :

    a) on effectue la réalisation des assemblages (20) de telle sorte qu'en régime transitoire, c'est-à-dire lorsque la vitesse de rotation de chaque dispositif (2) varie dans le temps entre une valeur nulle et une valeur arbitraire, correspondant au fonctionnement en continu, on ait la relation

$$\frac{L1 - L2}{L} \le \varepsilon,$$

    L1 étant la longueur du fil le plus long de l'assemblage, L2 étant la longueur du fil le plus court de l'assemblage, L1 et L2 étant déterminées pour la longueur L arbitraire de l'assemblage produit par ce dispositif, et $\epsilon$ étant une valeur arbitraire ;
    b) on entraîne la nappe (21) d'assemblages (20) par des moyens de tirage (23) communs à tous les assemblages ;
    c) on utilise des moyens (32) permettant d'une part de synchroniser entre elles les vitesses de rotation des dispositifs (2), de façon à avoir une vitesse commune pour ces dispositifs et d'autre part de synchroniser la vitesse des dispositifs et la vitesse des moyens de tirage (23) ;
    d) on enroule la nappe d'assemblages sur l'ensouple (29) ;
    e) on utilise des moyens (33) permettant de détecter un défaut (35) éventuel sur au moins un fil quelconque, ou au moins un assemblage quelconque ;
    f) on arrête la production de la nappe (21) et l'enroulement de la nappe sur l'ensouple (29) lorsqu'un tel défaut (35) est détecté, cet arrêt étant réalisé de telle sorte que le défaut (35) soit disposé à l'arrêt dans la nappe, avant l'ensouple, dans le sens de progression de la nappe.

2. Procédé selon la revendication 1, dans lequel $\epsilon$ est au plus égal à 5 %.

3. Procédé selon la revendication 2 dans lequel $\epsilon$ est au plus égal à 2 %.

4. Installation (1) permettant d'obtenir en ligne la réalisation d'une nappe (21) d'assemblages (20) de fils (30, 40) et l'enroulage de cette nappe (21) sur une ensouple (29), l'installation (1) comportant plusieurs dispositifs rotatifs (2) permettant chacun la réalisation d'un assemblage (20) à partir de plusieurs fils (30, 40), de façon à obtenir une nappe (21) d'assemblages (20), l'installation étant caractérisée par les points suivants :

    a) chaque dispositif (2) est tel qu'en régime transitoire, c'est-à-dire lorsque la vitesse de rotation de ce dispositif (2) varie dans le temps entre une valeur nulle et une valeur arbitraire, correspondant au fonctionnement en continu de l'installation, on ait la relation :

$$\frac{L1 - L2}{L} \le \varepsilon,$$

    L1 étant la longueur du fil le plus long de l'assemblage, L2 étant la longueur du fil le plus court de l'assemblage, L1 et L2 étant déterminées pour la longueur L arbitraire de l'assemblage produit par ce dispositif, et $\epsilon$ étant une valeur arbitraire ;
    b) elle comporte des moyens de tirage (23) communs à tous les assemblages (20) permettant l'entraînement de la nappe (21) d'assemblages (20) ;

c) elle comporte des moyens (32) permettant d'une part de synchroniser entre elles les vitesses de rotation des dispositifs (2), de façon à avoir une vitesse commune pour ces dispositifs (2), et d'autre part de synchroniser la vitesse des dispositifs (2) et la vitesse des moyens de tirage (23) ;

d) elle comporte une ensouple (29) et des moyens (31) permettant d'enrouler la nappe (21) d'assemblages (20) sur l'ensouple (29) ;

e) elle comporte des moyens (33) permettant de détecter un défaut (35) éventuel sur au moins un fil quelconque ou au moins un assemblage quelconque ;

f) elle comporte des moyens (34) permettant d'arrêter l'installation (1) lorsqu'un tel défaut (35) est détecté, l'installation (1) étant agencée de telle sorte que, lorsque l'installation (1) est ainsi arrêtée, le défaut (35) soit disposé dans la nappe (21), avant l'ensouple (29), dans le sens de progression de la nappe (21).

5. Installation (1) selon la revendication 4 dans laquelle $\epsilon$ est au plus égal à 5 %.

6. Installation (1) selon la revendication 5 dans laquelle $\epsilon$ est au plus égal à 2 %.

**Claims**

1. A method permitting the on-line production of a ply (21) of assemblies (20) of threads (30, 40) and the winding of this ply on a beam (29) using a plurality of rotary devices (2), each of which permits the production of an assembly (20) from a plurality of threads (30, 40), so as to obtain a ply (21) of assemblies (20), the method being characterised by the following features:

(a) the assemblies (20) are produced such that in transitory operation, that is to say, when the speed of rotation of each device (2) varies in time between a value of zero and an arbitrary value corresponding to continuous operation, one has the relationship

$$\frac{L1 - L2}{L} \leq \epsilon$$

L1 being the length of the longest thread of the assembly and L2 being the length of the shortest thread of the assembly, L1 and L2 being determined for the arbitrary length L of the assembly produced by this device,

and $\epsilon$ being an arbitrary value;

(b) the ply (21) of assemblies (20) is driven by pulling means (23) which are common to all the assemblies;

(c) means (32) are used which on the one hand make it possible to synchronise the speeds of rotation of the devices (2) with each other so as to have a common speed for these devices and, on the other hand, to synchronise the speed of the devices and the speed of the pulling means (23);

(d) the ply of assemblies is wound on the beam (29);

(e) means (33) are used which make it possible to detect a possible defect (35) on at least any one thread or at least any one assembly;

(f) the production of the ply (21) and the winding of the ply on the beam (29) is interrupted when such a defect (35) is detected, this interruption being effected in such a manner that, upon the interruption, the defect (35) is located in the ply in front of the beam, as seen in the direction of advance of the ply.

2. A method according to Claim 1, in which $\epsilon$ is at most equal to 5%.

3. A method according to Claim 2, in which $\epsilon$ is at most equal to 2%.

4. An installation (1) permitting the on-line production of a ply (21) of assemblies (20) of threads (30, 40) and the winding of this ply (21) on a beam (29), the installation (1) comprising a plurality of rotary devices (2) each of which permits the production of an assembly (20) from a plurality of threads (30, 40) so as to obtain a ply (21) of assemblies (20), the installation being characterised by the following features:

(a) each device (2) is such that in transitory operation, that is to say, when the speed of rotation of this device (2) varies in time between a value of zero and an arbitrary value corresponding to the continuous operation of the installation, one has the relationship

$$\frac{L1 - L2}{L} \leq \epsilon$$

L1 being the length of the longest thread of the assembly and L2 being the length of the shortest thread of the assembly, L1 and L2 being determined for the arbitrary length L of the assembly produced by this device, and ε being an arbitrary value;

(b) it comprises pulling means (23) common to all the assemblies (20) which permit the driving along of the ply (21) of assemblies (20);

(c) it comprises means (32) which, on the one hand, make it possible to synchronise the speeds of rotation of the devices (2) with each other, so as to have a common speed for these devices (2), and, on the other hand, to synchronise the speed of the devices (2) and the speed of the pulling means (23);

(d) it comprises a beam (29) and means (31) making it possible to wind the ply (21) of assemblies (20) on the beam (29);

(e) it comprises means (33) for detecting a possible defect (35) in at least any one thread or at least any one assembly;

(f) it comprises means (34) for stopping the installation (1) when such a defect (35) is detected, the installation (1) being so arranged that when the installation (1) is thus stopped, the defect (35) is located in front of the beam (29) in the ply (21), as seen in the direction of advance of the ply (21).

5. An installation (1) according to Claim 4, in which ε is equal to at most 5%.

6. An installation (1) according to Claim 5, in which ε is equal to at most 2%.

**Patentansprüche**

1. Verfahren zum gleichzeitigen Erzeugen einer Schar (21) von Bündeln (20) von Fäden (30, 40) und Aufwickeln dieser Schar auf einen Kettbaum (29), wobei mehrere drehbare Einrichtungen (2) verwendet werden, mit denen jeweils ein Bündel (20) aus mehreren Fäden (30, 40) erzeugt werden kann, um eine Schar (21) von Bündein (20) zu erhalten, **gekennzeichnet durch** folgende Punkte:

a) das Erzeugen der Bündel (20) wird so durchgeführt, daß im Übergangsbetrieb, d.h. wenn die Drehgeschwindigkeit einer jeden Einrichtung (2) mit der Zeit zwischen dem Wert Null und einem willkürlichen Wert variiert, der dem Dauerbetrieb entspricht, die Beziehung

$$\frac{L1 - L2}{L} \leq \varepsilon$$

erfüllt ist, wobei L1 die Länge des längsten Fadens des Bündels und L2 die Länge des kürzesten Fadens des Bündels ist, wobei L1 und L2 für die willkürliche Länge L des von dieser Einrichtung erzeugten Bündels bestimmt werden und ε ein willkürlicher Wert ist;

b) die Schar (21) von Bündein (20) wird durch allen Bündeln gemeinsame Zugmittel (23) angetrieben;

c) es werden Mittel (32) einerseits zum Synchronisieren der Drehgeschwindigkeiten der Einrichtungen (2) untereinander, um eine gemeinsame Geschwindigkeit für die Einrichtungen zu erhalten, und andererseits zum Synchronisieren der Geschwindigkeit der Einrichtungen und der Geschwindigkeit der Zugmittel (23) verwendet;

d) die Bündelschar wird auf den Kettbaum (29) aufgewickelt;

e) es werden Mittel (33) zum Erfassen eines möglichen Fehlers (35) an wenigstens einem beliebigen Faden oder wenigstens einem beliebigen Bündel verwendet;

f) das Erzeugen der Schar (21) und das Aufwickeln der Schar auf den Kettbaum (29) werden angehalten, wenn ein solcher Fehler (35) erfaßt wird, wobei das Anhalten so durchgeführt wird, daß der Fehler (35) beim Halt in der Schar und in Laufrichtung der Schar vor dem Kettbaum liegt.

2. Verfahren nach Anspruch 1, bei dem ε höchstens gleich 5 % ist.

3. Verfahren nach Anspruch 2, bei dem ε höchstens gleich 2 % ist.

4. Vorrichtung (1) zum gleichzeitigen Erzeugen einer Schar (21) von Bündeln (20) von Fäden (30, 40) und Aufwickeln dieser Schar (21) auf einen Kettbaum (29), mit mehreren drehbaren Einrichtungen (2), mit denen jeweils ein Bündel (20) aus mehreren Fäden (30, 40) erzeugt werden kann, um eine Schar (21) von Bündein (20) zu erhalten, **dadurch gekennzeichnet, daß**

a) jede Einrichtung (2) so beschaffen ist, daß im Übergangsbetrieb, d.h. wenn die Drehgeschwindigkeit dieser Einrichtung (2) mit der Zeit zwischen dem Wert Null und einem willkürlichen Wert variiert, der dem Dauerbetrieb der Vorrichtung entspricht, die Beziehung

$$\frac{L1 - L2}{L} \leq \varepsilon$$

erfüllt ist, wobei L1 die Länge des längsten Fadens des Bündels und L2 die Lange des kürzesten Fadens des Bündels ist und L1 und L2 für die willkürliche Länge L des von dieser Einrichtung erzeugten Bündels bestimmt werden und $\epsilon$ ein willkürlicher Wert ist;

b) die Vorrichtung allen Bündein (20) gemeinsame Zugmittel (23) zum Antreiben der Schar (21) von Bündein (20) umfaßt;

c) die Vorrichtung Mittel (32) einerseits zum Synchronisieren der Drehgeschwindigkeiten der Einrichtungen (2) untereinander, um eine gemeinsame Geschwindigkeit für diese Einrichtungen (2) zu erhalten, und andererseits zum Synchronisieren der Geschwindigkeit dieser Einrichtungen (2) und der Geschwindigkeit der Zugmittel (23) umfaßt;

d) die Vorrichtung einen Kettbaum (29) und Mittel (31) zum Aufwickeln der Schar (21) von Bündein (20) auf dem Kettbaum (29) umfaßt;

e) die Vorrichtung Mittel (33) zum Erfassen eines möglichen Fehlers (35) an wenigstens einem beliebigen Faden oder wenigstens einem beliebigen Bündel umfaßt;

f) die Vorrichtung Mittel (34) zum Anhalten der Vorrichtung (1), wenn ein solcher Fehler (35) erfaßt wird, umfaßt, wobei die Vorrichtung (1) so gesteuert wird, daß, wenn die Vorrichtung (1) so angehalten wird, der Fehler (35) in der Schar (21) und in Laufrichtung der Schar (21) vor dem Kettbaum (29) liegt.

5. Vorrichtung (1) nach Anspruch 4, bei der $\epsilon$ höchstens gleich 5 % ist.

6. Vorrichtung (1) nach Anspruch 5, bei der $\epsilon$ höchstens gleich 2 % ist.

FIG.1

FIG.2

Fig.3